(19) Europäisches Patentamt
European Patent Office
Office européen des brevets

(11) **EP 4 293 441 A1**

(12) **EUROPÄISCHE PATENTANMELDUNG**

(43) Veröffentlichungstag:
**20.12.2023 Patentblatt 2023/51**

(21) Anmeldenummer: **23176065.3**

(22) Anmeldetag: **30.05.2023**

(51) Internationale Patentklassifikation (IPC):
**G05B 19/042** *(2006.01)* **A47L 15/00** *(2006.01)*
**G05B 15/02** *(2006.01)* **A47L 15/42** *(2006.01)*

(52) Gemeinsame Patentklassifikation (CPC):
**G05B 19/042; A47L 15/0021; G05B 15/02;**
A47L 15/0063; A47L 2401/30; A47L 2501/26;
A47L 2501/30; G05B 2219/2613

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **13.06.2022 BE 202205461**

(71) Anmelder: **Miele & Cie. KG**
**33332 Gütersloh (DE)**

(72) Erfinder:
• **Riedenklau, Eckard**
**33647 Bielefeld (DE)**
• **Kara, Seyfettin**
**32139 Spenge (DE)**

(54) **VERFAHREN UND VERKNÜPFUNGSEINHEIT ZUM ERZEUGEN EINER BILDSEQUENZ EINES MEHRPHASIGEN REINIGUNGSPROGRAMMS FÜR EIN REINIGUNGSGERÄT, VERFAHREN ZUM ANZEIGEN EINER BILDSEQUENZ, ANZEIGEEINRICHTUNG, REINIGUNGSGERÄT UND MOBILE EINHEIT**

(57)     Die Erfindung betrifft ein Verfahren zum Erzeugen einer Bildsequenz eines mehrphasigen Reinigungsprogramms für ein Reinigungsgerät (100) mit einem Aufnahmeraum (110) zum Aufnehmen von Reinigungsgut (105), wobei das Verfahren einen Schritt des Einlesens von Sensordaten über eine Schnittstelle zu einer Sensoreinrichtung (115) des Reinigungsgerätes (100) umfasst, wobei die Sensordaten ein Startbild (200) des Aufnahmeraums (110) zu einem Startzeitpunkt des mehrphasigen Reinigungsprogramms und mindestens ein weiteres Bild des Aufnahmeraums (110) zu einem weiteren Zeitpunkt des Reinigungsprogramms repräsentieren. Weiterhin umfasst das Verfahren einen Schritt des Verarbeitens der Sensordaten unter Verwendung des Startzeitpunkts und/oder des weiteren Zeitpunkts, um eine das Reinigungsprogramm und/oder einen Ablauf des Reinigungsprogramms repräsentierende Bildsequenz zu erzeugen.

FIG 1

EP 4 293 441 A1

**Beschreibung**

Verfahren und Verknüpfungseinheit zum Erzeugen einer Bildsequenz eines mehrphasigen Reinigungsprogramms für ein Reinigungsgerät, Verfahren zum Anzeigen einer Bildsequenz, Anzeigeeinrichtung, Reinigungsgerät und mobile Einheit

Die Erfindung betrifft ein Verfahren und eine Verknüpfungseinheit zum Erzeugen einer Bildsequenz eines mehrphasigen Reinigungsprogramms für ein Reinigungsgerät, ein Verfahren zum Anzeigen einer Bildsequenz, eine Anzeigeeinrichtung, ein Reinigungsgerät und eine mobile Einheit.

Die DE 10 2013 223 932 A1 beschreibt ein Verfahren zur Fernüberwachung des Betriebs eines Haushaltgeräts, ein tragbares Kommunikationsendgerät und ein Computerprogrammprodukt.

Der hier vorgestellte Ansatz stellt sich die Aufgabe, ein verbessertes Verfahren und eine verbesserte Verknüpfungseinheit zum Erzeugen einer Bildsequenz eines mehrphasigen Reinigungsprogramms für ein Reinigungsgerät, ein verbessertes Verfahren zum Anzeigen einer Bildsequenz, eine verbesserte Anzeigeeinrichtung, ein verbessertes Reinigungsgerät und eine verbesserte mobile Einheit zu schaffen.

Erfindungsgemäß wird diese Aufgabe durch ein Verfahren und eine Verknüpfungseinheit zum Erzeugen einer Bildsequenz eines mehrphasigen Reinigungsprogramms für ein Reinigungsgerät, ein Verfahren zum Anzeigen einer Bildsequenz, eine Anzeigeeinrichtung, ein Reinigungsgerät und eine mobile Einheit mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen beispielsweise darin, einem Nutzer einen hilfreichen Einblick in den Reinigungsprozess zu ermöglichen, sodass der Nutzer beispielsweise unter Verwendung von animierten Prozessbildern, beispielsweise einer Bildsequenz, Fehlerursachen selbstständig beheben kann und zusätzlich oder alternativ zukünftig vermeiden kann, sich an einen Kundendienst wenden zu müssen.

Es wird ein Verfahren zum Erzeugen einer Bildsequenz eines mehrphasigen Reinigungsprogramms für ein Reinigungsgerät mit einem Aufnahmeraum zum Aufnehmen von Reinigungsgut vorgestellt, wobei das Verfahren einen Schritt des Einlesens von Sensordaten über eine Schnittstelle zu einer Sensoreinrichtung des Reinigungsgerätes umfasst. Die Sensordaten repräsentieren dabei ein Startbild des Aufnahmeraums zu einem Startzeitpunkt des mehrphasigen Reinigungsprogramms und mindestens ein weiteres Bild des Aufnahmeraums zu einem weiteren Zeitpunkt des Reinigungsprogramms. Weiterhin umfasst das Verfahren einen Schritt des Verarbeitens der Sensordaten unter Verwendung des Startzeitpunkts und zusätzlich oder alternativ des weiteren Zeitpunkts, um eine das Reinigungsprogramm und/oder einen Ablauf des Reinigungsprogramms repräsentierende Bildsequenz zu erzeugen.

Das Reinigungsgerät kann beispielsweise als eine haushaltsübliche Spülmaschine ausgeformt sein oder alternativ auch zu gewerblichen Zwecken eingesetzt werden. Das Reinigungsgerät kann dabei beispielsweise eine Mehrzahl von Reinigungsprogrammen aufweisen, die beispielsweise je nach Verschmutzungsgrad des Reinigungsguts, das bedeutet beispielsweise Geschirr, gewählt werden kann. Solche Reinigungsprogramme können beispielsweise mehrphasig sein, das bedeutet die Reinigungsprogramme können mehrere Reinigungsphasen umfassen, sodass beispielsweise Temperaturen einer Reinigungsflüssigkeit oder ein Druck, mit dem die Reinigungsflüssigkeit in den Aufnahmeraum abgegeben werden kann, sich innerhalb des Reinigungsprogramms verändern kann. Die Bildsequenz kann beispielsweise als eine Animation bezeichnet werden, die durch das Verarbeiten bzw. Zusammenfügen mehrerer Bilder, beispielsweise Kamerabilder, erzeugt werden kann. Folglich kann die Sensoreinrichtung beispielsweise mindestens eine Kamera aufweisen, die den Aufnahmeraum des Reinigungsgerätes optisch erfassen kann. Zusätzlich oder alternativ kann die Sensoreinrichtung weitere Sensoren aufweisen. Die Bildsequenz repräsentiert dabei das Reinigungsprogramm und/oder den Ablauf des Reinigungsprogramms insofern, dass es dieses vorteilhafterweise zusammengerafft bildlich wiedergeben kann. Dabei kann das erste Bild, das hier als Startbild bezeichnet ist, einen Zustand im Inneren des Aufnahmeraums zu Beginn des Reinigungsprogramms repräsentieren, um beispielsweise eine Ausgangsverschmutzung des Reinigungsgutes visualisieren zu können. Das Startbild und das mindestens eine weitere Bild können weiterhin beispielsweise mindestens eine Betriebsinformation des Reinigungsprogramms umfassen, wie beispielsweise eine Spülphase. Im Schritt des Verarbeitens können beispielsweise mathematische Formeln und Regeln angewandt werden, um beispielsweise Intervalle bezüglich in Verbindung mit den Zeitpunkten innerhalb des Reinigungsprogramms berechnen zu können.

Gemäß einer Ausführungsform kann im Schritt des Verarbeitens das weitere Bild als Endbild interpretiert werden, das ein Programmende des Reinigungsprogramms repräsentieren kann. Das bedeutet, dass das Startbild beispielsweise als erstes und das Endbild als letztes erfasstes Bild realisiert sein können und somit beispielsweise ein Gerüst für die Bildsequenz bilden können. Eine solche Ausführungsform des hier vorgestellten Ansatzes bietet den Vorteil, dass die Bildsequenz den Ablauf des Reinigungsprogramms in voller Länge darstellen kann. Auf diese Weise erhält ein Nutzer des Reinigungsgerätes eine kompakte und vollständige Information über den Verlauf des Reinigungsprogramms bzw. das finale Ergebnis des Programms.

Weiterhin können die Sensordaten im Schritt des Verarbeitens derart verarbeitet werden, um einen Anzeigezeitpunkt und eine Anzeigedauer für das Startbild und zusätzlich oder alternativ einen weiteren Anzeigezeitpunkt und eine weitere Anzeigedauer für das weitere Bild unter Berücksichtigung einer vorbestimmten Programmlaufzeit des Reinigungsprogramms ermitteln zu können. Das bedeutet, dass die Anzeigedauer der einzelnen Bilder von der Länge der Programmphase, denen die einzelnen Bilder jeweils zugeordnet sind, und der Programmlaufzeit abhängen kann. Die Länge der Bildsequenz kann sich demnach nach der Programmlaufzeit des Reinigungsprogramms richten. Eine solche Ausführungsform bietet den Vorteil, dem Nutzer auch durch die Anzeige der betreffenden Bilder in der Bildsequenz die Dauer der entsprechenden Phase im Reinigungsprogramm abbilden zu können, sodass der Nutzer eine möglichst intuitive Information darüber erhält, wie lange die jeweilige Phase des Reinigungsprogramms dauert. Hierdurch kann der Nutzer beispielsweise für die nachfolgende Wahl eines Reinigungsprogramms an dem Reinigungsgerät möglicherweise andere oder weitere Einstellungen oder Modifikationen vornehmen, wenn das Reinigungsergebnis nicht seinen Vorstellungen entsprochen hat.

Gemäß einer Ausführungsform können im Schritt des Einlesens weitere Sensordaten über die Schnittstelle zu der Sensoreinrichtung eingelesen werden, die mindestens ein Zwischenbild des Aufnahmeraums zu einem zwischen dem Startzeitpunkt und dem weiteren Zeitpunkt liegenden Zwischenzeitpunkt repräsentieren können. Im Schritt des Verarbeitens können die weiteren Sensordaten unter Verwendung des Zwischenzeitpunkts und/oder des Zwischenbildes verarbeitet werden, um die Bildsequenz erzeugen zu können. Das Zwischenbild kann vorteilhafterweise während oder kurz nach einem Phasenwechsel des Reinigungsprogramms erfasst werden und kann somit einen Zwischenstand des Reinigungsvorgangs repräsentieren. Das Zwischenbild kann dabei zusätzlich zu dem Startbild und dem weiteren Bild verarbeitet werden. Weiterhin optional können die Sensordaten beispielsweise eine Mehrzahl von Zwischenbildern repräsentieren. Eine solche Ausführungsform bietet den Vorteil, möglichst präzise den Verlauf des Reinigungsprogramms bzw. dessen Ergebnis in dem Aufnahmeraum abbilden zu können.

Ferner kann das Zwischenbild ansprechend auf ein Wechselsignal eingelesen werden, wobei das Wechselsignal einen Phasenwechsel des Reinigungsprogramms repräsentieren kann. Vorteilhafterweise kann pro Phasenwechsel ein Wechselsignal eingelesen werden, sodass beispielsweise bei mehreren Phasenwechseln mehrere Zwischenbilder erfasst und verarbeitet werden können. Ein Phasenwechsel des Reinigungsprogramms kann beispielsweise ein Wechsel unterschiedlicher Reinigungsfunktionen in dem Reinigungsgerät sein, beispielsweise ein Wechsel vom Spülen mit klarem Wasser zu einem Reinigen mittels Reinigungsflotte. Eine solche Ausführungsform des hier vorgestellten Ansatzes bietet den Vorteil, dass möglichst zeitnah nach einem solchen Phasenwechsel auch das Reinigungsergebnis im Aufnahmeraum dokumentiert und für den Nutzer angezeigt werden kann.

Es werden während des Reinigungsprogramms somit mehrere, vorzugsweise 4 bis 10 Bilder erfasst, um die Bildsequenz zu erzeugen. Die Anzeigedauer der einzelnen Bilder innerhalb der Bildsequenz hängt vorzugsweise von der Länge der Programmphase, denen die einzelnen Bilder jeweils zugeordnet sind, und der Programmlaufzeit ab. Zwischen zwei aufeinanderfolgenden Bildern enthält die Bildsequenz vorzugsweise eine Überblendungsphase, in der der Anteil des ersten der beiden Bilder, bzw. dessen Opazität, mit fortschreitender Zeit abnimmt und der Anteil des zweiten der beiden Bilder zunimmt. Die Anzeigedauer der einzelnen Bilder in der Bildsequenz kann somit einen Zeitabschnitt umfassen, in der das Bild so wie es aufgenommen wurde dargestellt wird, sowie einen zweiten Zeitabschnitt in Form einer Überblendungsphase, in der das Bild mit einem ggf. nachfolgenden Bild überblendet wird, und/oder einen weiteren zweiten Zeitabschnitt in Form einer Überblendungsphase, in der das Bild mit einem ggf. vorangehenden Bild überblendet wird.

Das Verfahren kann einen Schritt des Bereitstellens der erzeugten Bildsequenz an eine Schnittstelle zu einer Reinigungsgeräte-internen oder Reinigungsgeräte-externen Anzeigeeinrichtung zum Anzeigen der erzeugten Bildsequenz umfassen. Vorteilhafterweise kann durch das Anzeigen der Bildsequenz der Reinigungsprozess, bzw. eine Reinigungsqualität überprüft werden. Die Reinigungsgeräte-interne Anzeigeeinrichtung kann beispielsweise ein Display sein, das beispielsweise in einer Bedienblende des Reinigungsgerätes integriert oder angeordnet sein kann. Die Reinigungsgeräte-externe Anzeigeeinrichtung kann beispielsweise Teil eines mobilen Gerätes sein, beispielsweise eines Tablets oder eines Smartphones. Dadurch kann die Bildsequenz beispielsweise unter Verwendung einer App angezeigt werden. Eine solche Ausführungsform des hier vorgestellten Ansatzes bietet den Vorteil einer möglichst flexiblen und für den Nutzer somit komfortablen Möglichkeit zur Darstellung der Bildsequenz.

Gemäß einer Ausführungsform kann im Schritt des Bereitstellens zumindest eine Geräteinformation bereitgestellt werden, die mindestens eine Zeitinformation, eine Programminformation und zusätzlich oder alternativ eine Verbrauchsinformation repräsentieren kann. Das bedeutet, dass zusätzlich zu der Bildsequenz beispielsweise ein Ressourcenverbrauch, eine Spülphase und zusätzlich oder alternativ weitere Geräteinformationen angezeigt werden können. Eine solche Ausführungsform des hier vorgeschlagenen Ansatzes bietet den Vorteil, dem Nutzer eine Zusatzinformation zu liefern, die beispielsweise für die Wahl eines Reinigungsprogramms in einem nachfolgenden Schritt relevant werden kann. Der Nutzer des Geräts erhält somit eine möglichst umfassende Information über die Wirkungen und Parameter des aktuellen Reinigungsvorgangs im Reinigungsgerät.

Der hier vorgestellte Ansatz schafft ferner eine Verknüpfungseinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Verknüpfungseinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Verknüpfungseinheit bereitgestellt werden kann. Die Verknüpfungseinheit kann ausgebildet sein, um die Ausgangssignale unter Verwendung einer in Hardware oder Software umgesetzten Verarbeitungsvorschrift zu bestimmen. Beispielsweise kann die Verknüpfungseinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ferner wird ein Verfahren zum Anzeigen einer Bildsequenz vorgestellt, die gemäß einer Variante eines zuvor genannten Verfahrens erzeugt wurde. Das Verfahren umfasst dazu einen Schritt des Einlesens der Bildsequenz und einen Schritt des Anzeigens von der Bildsequenz entsprechenden Daten an einer Anzeigeeinrichtung.

Das Verfahren kann vorteilhafterweise für eine Anzeigeeinrichtung durchgeführt werden, die Reinigungsgeräte-intern, beispielsweise als Geräteanzeige, oder Reinigungsgeräte-extern, beispielsweise als Display eines Tablets oder eines Smartphones, realisiert sein kann.

Außerdem wird eine Anzeigeeinrichtung zum Anzeigen einer Bildsequenz für ein Reinigungsgerät vorgestellt, wobei die Anzeigeeinrichtung Einheiten zum Ansteuern und zusätzlich oder alternativ Ausführen der Schritte des zuvor vorgestellten Verfahrens aufweist.

Das bedeutet, dass die Anzeigeeinrichtung das Anzeigen der Bildsequenz unabhängig von dem Reinigungsgerät steuern kann, da sie beispielsweise diesbezüglich die Funktion eines Steuergerätes aufweisen kann.

Es wird weiterhin ein Reinigungsgerät vorgestellt, das einen Aufnahmeraum zum Aufnehmen von Reinigungsgut, eine Sensoreinrichtung zum Erfassen von Sensordaten bezüglich des Aufnahmeraums und eine Verknüpfungseinheit in einer zuvor genannten Variante aufweist, die mit der Sensoreinrichtung gekoppelt ist.

Das Reinigungsgerät kann beispielsweise als eine Spülmaschine ausgeformt sein, die für private oder auch als gewerbliches Gerät genutzt werden kann. Alternativ kann das Reinigungsgerät auch als Waschmaschine ausgeformt sein. Der Aufnahmeraum kann beispielsweise als ein Innenraum realisiert sein, in dem das Reinigungsgut, beispielsweise Geschirr, gereinigt werden kann. Das Reinigungsgut kann beispielsweise zum Reinigen des Reinigungsgutes in mindestens einen Korb angeordnet werden. Der Korb kann beispielsweise als ein Einschub realisiert sein. Beispielsweise kann die Sensoreinrichtung mindestens eine Kamera aufweisen, die ausgebildet sein kann um die Sensordaten zu erfassen.

Gemäß einer Ausführungsform kann das Reinigungsgerät eine Anzeigeeinrichtung in einer zuvor genannten Variante aufweisen. Vorteilhafterweise kann ein Nutzer dadurch den Reinigungsprozess verfolgen und beispielsweise selbstständig Fehlerursachen beheben.

Ferner wird eine mobile Einheit und zusätzlich oder alternativ eine zentrale Rechnereinheit vorgestellt, die eine Verknüpfungseinheit in einer zuvor genannten Variante aufweist.

Die mobile Einheit kann beispielsweise als ein Smartphone oder als ein Tablet ausgeformt sein. Die zentrale Recheneinheit kann beispielsweise als eine Cloud realisiert werden, welche die Sensordaten von einem entfernten und haushaltsexternen Gerät einlesen kann, beispielsweise über eine Telekommunikationsleitung.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Ein Ausführungsbeispiel der Erfindung ist in den Zeichnungen rein schematisch dargestellt und wird nachfolgend näher beschrieben. Es zeigt

Figur 1    eine schematische Schnittdarstellung eines Reinigungsgeräts gemäß einem Ausführungsbeispiel;
Figur 2    eine beispielhafte Darstellung eines Startbildes gemäß einem Ausführungsbeispiel;
Figur 3    eine beispielhafte Darstellung eines Zwischenbildes gemäß einem Ausführungsbeispiel;
Figur 4    eine beispielhafte Darstellung eines Ausführungsbeispiels eines Zwischenbildes;
Figur 5    eine beispielhafte Darstellung eines Ausführungsbeispiels eines Zwischenbildes;
Figur 6    eine beispielhafte Darstellung eines Ausführungsbeispiels eines Zwischenbildes;
Figur 7    eine beispielhafte Darstellung eines weiteren Bildes gemäß einem Ausführungsbeispiel;
Figur 8    eine schematische Darstellung eines Ausführungsbeispiels eines Zeitverlaufs einer erzeugten Bildsequenz;
Figur 9    eine schematische Darstellung eines Ausführungsbeispiels eines Zeitverlaufs einer erzeugten Bildsequenz;
Figur 10   eine schematische Darstellung eines Ausführungsbeispiels einer Anzeigefläche auf einer Anzeigeeinrichtung;

Figur 11    eine schematische Darstellung einer mobilen Einheit gemäß einem Ausführungsbeispiel;

Figur 12    ein Ablaufdiagramm eines Ausführungsbeispiels eines Verfahrens zum Erzeugen einer Bildsequenz eines mehrphasigen Reinigungsprogramms für ein Reinigungsgerät;

Figur 13    ein Blockschaltbild einer Verknüpfungseinheit gemäß einem Ausführungsbeispiel;

Figur 14    ein Ablaufdiagramm eines Ausführungsbeispiels eines Verfahrens zum Anzeigen einer Bildsequenz; und

Figur 15    ein Blockschaltbild eines Ausführungsbeispiels einer Anzeigeeinrichtung zum Anzeigen einer Bildsequenz für ein Reinigungsgerät.

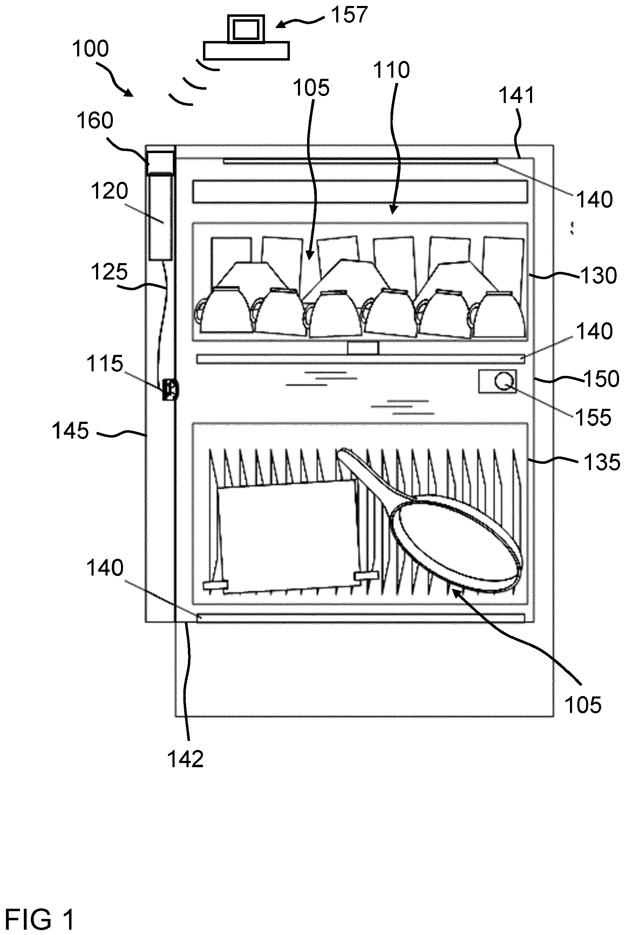

Figur 1 zeigt eine schematische Schnittdarstellung eines Reinigungsgeräts 100 gemäß einem Ausführungsbeispiel. Das Reinigungsgerät 100 ist als ein haushaltsübliches Gerät oder alternativ auch als ein gewerbliches Gerät realisierbar, wie beispielsweise eine Spülmaschine. Das Reinigungsgerät 100 ist ausgebildet, um Reinigungsgut 105 in einem Aufnahmeraum 110 zum aufnehmen des Reinigungsguts 105 zu reinigen. Weiterhin weißt das Reinigungsgerät 100 eine Sensoreinrichtung 115 zum Erfassen von Sensordaten bezüglich des Aufnahmeraums 110 sowie eine Verknüpfungseinheit 120 auf, die mit der Sensoreinrichtung 115 beispielsweise mittels einer elektrischen Leitung 125 gekoppelt ist.

Gemäß diesem Ausführungsbeispiel als das Reinigungsgerät 100 einen Oberkorb 130 und einen Unterkorb 135 auf, die zum Aufnehmen und/oder zum Halten des Reinigungsguts 105 ausgeformt sind. Diese Körbe 130, 135 sind dabei als Einschübe realisiert. Gemäß diesem Ausführungsbeispiel weist das Reinigungsgerät 100 eine Mehrzahl von Spülarmen 140 auf, die ausgebildet sind, um eine Reinigungsflüssigkeit in den Aufnahmeraum 110 abzugeben. Beispielsweise ist einer der Spülarme 140 am Oberkorb 130 angeordnet. Die weiteren der Spülarme 140 sind beispielsweise derart angeordnet, dass die Reinigungsflüssigkeit das in den Körben 130, 135 angeordnete Reinigungsgut 105 in einem Betriebszustand des Reinigungsgerätes 100 trifft. Genauer gesagt ist ein erster der Spülarme 140 an einer Deckenfläche 141, ein zweiter der Spülarme 140 an dem Oberkorb 130 und ein dritter der Spülarme 140 an einer Bodenfläche 142 des Reinigungsgeräts 100 angeordnet.

Der Aufnahmeraum 110 ist weiterhin durch eine Spülraumtür 145 verschlossen. Mittig an der Spülraumtür 145 ist gemäß diesem Ausführungsbeispiel die Sensoreinrichtung 115 angeordnet, die beispielsweise mindestens eine zu der Sensoreinrichtung 115 gehörende Kamera aufweist. Durch die Position der Sensoreinrichtung 115 wird beispielsweise der gesamte Aufnahmeraum 110 erfasst. Weiterhin optional ist an einer den Aufnahmeraum 110 umgebenden Seitenwand 150 eine Lichtquelle 155 zum Ausleuchten des Aufnahmeraums 110 angeordnet. Die Lichtquelle 155 ist beispielsweise als eine Licht-emittierende Diode (LED) realisiert.

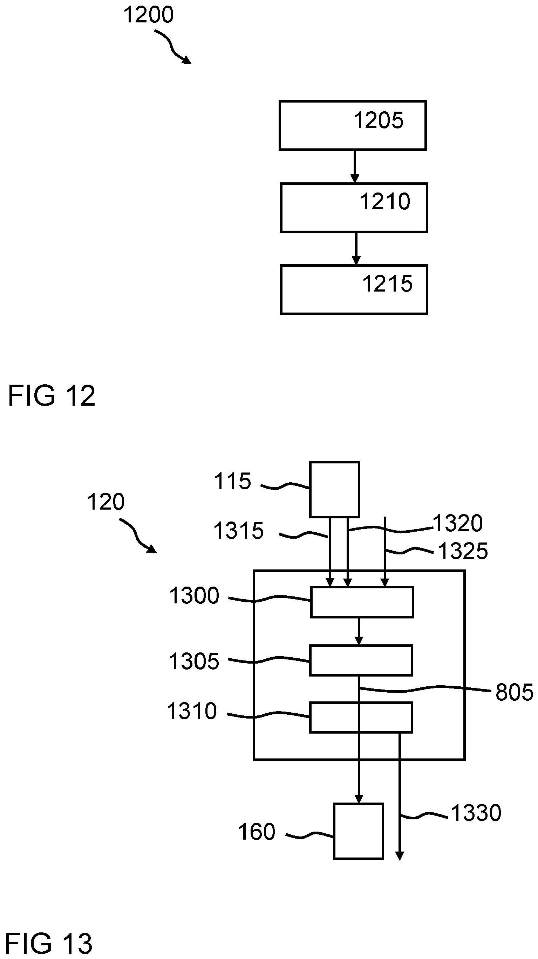

Die Verknüpfungseinheit 120 ist beispielsweise als eine Gerätesteuerung oder als ein Steuergerät realisiert oder realisierbar und ist demnach ausgebildet, um beispielsweise diverse Gerätefunktionen anzusteuern oder durchzuführen und somit ein Überführen des Reinigungsgerätes 100 von einem Betriebszustand in einen anderen Betriebszustand zu bewirken. Eine solche Gerätefunktion ist beispielsweise ein Verfahren zum Erzeugen einer Bildsequenz eines mehrphasigen Reinigungsprogramms, wie es in einer der nachfolgenden Figuren, insbesondere in Figur 12, näher beschrieben wird. Die Bildsequenz wird beispielsweise unter Verwendung einer oder mehrerer mathematischer Formeln erzeugt. Das bedeutet, dass das Reinigungsprogramm beispielsweise mehrere Programmphasen umfasst, die für einen Reinigungsprozess nacheinander durchgeführt werden. Lediglich optional sind einzelne Programmphasen wiederholbar. Zusätzlich oder alternativ ist das Reinigungsgerät 100 mit einer mobilen Einheit und/oder einer zentralen Rechnereinheit 157 koppelbar, welche optional die Verknüpfungseinheit 120 aufweist. Das bedeutet, dass das erwähnte Verfahren demnach auf der mobilen Einheit und/oder auf der zentralen Rechnereinheit durchführbar ist. Die mobile Einheit ist beispielsweise als ein Reinigungsgeräte-externes Smartphone oder Tablet realisiert, welches beispielsweise mittels einer Applikation mit dem Reinigungsgerät 100 kommuniziert. Die Rechnereinheit kommuniziert beispielsweise mittels einer Telekommunikationsleitung und/oder über eine Cloud mit dem Reinigungsgerät 100 und ist demnach als Reinigungsgeräte-externe und haushaltsfremde Einheit ausgeführt.

Lediglich optional weist das Reinigungsgerät 100 eine Anzeigeeinrichtung 160 auf, die ausgebildet ist, um die Bildsequenz anzuzeigen. Die Anzeigeeinrichtung 160 weist dabei Einheiten zum Ansteuern und/oder Ausführen von Schritten eines Verfahrens zum Anzeigen einer Bildsequenz, wie sie in den Figuren 13 bis 14 beschrieben werden.

In anderen Worten ausgedrückt wird ein Geschirrspüler mit einer Kamera für eine übersichtliche Schnelldarstellung von Spülprozessen vorgestellt.

Primärer Einsatzzweck der Sensoreinrichtung 115 als Kamera ist bisher beispielsweise ein Bestimmen eines Beladungsgrades des Reinigungsgeräts 100 oder ein automatisches Ermitteln zusätzlicher, prozessrelevanter Parameter. Eine Darstellung des Kamerabildes bei einem Nutzer beispielsweise mittels einer App liegt daher nahe. Vor diesem Hintergrund wird ein Ansatz zur Nutzung und strukturellen Aufbereitung der Bilder speziell aus einem Spülprozess zur gezielten Information für die Nutzer und Unterstützung bei einer selbstständigen Suche nach eventuellen Fehlerquellen beschrieben.

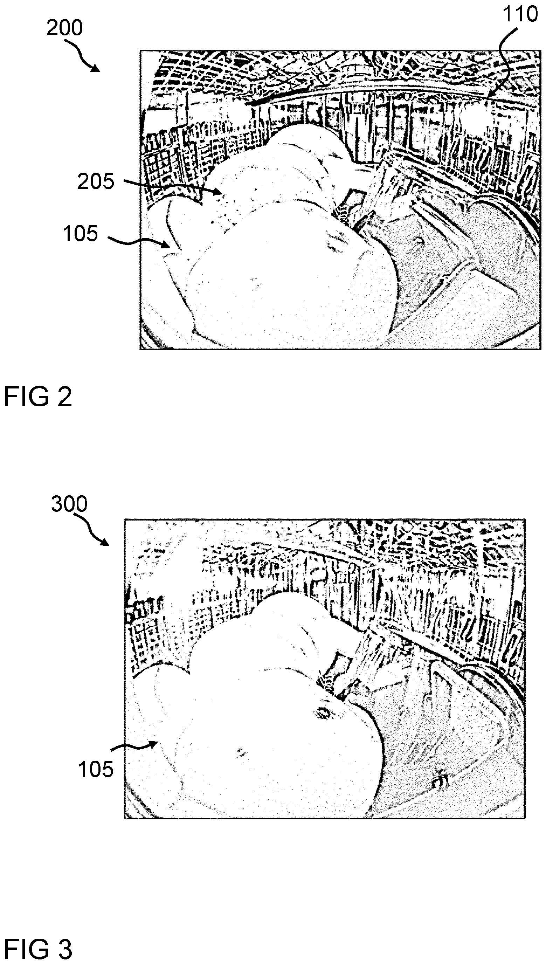

Figur 2 zeigt eine beispielhafte Darstellung eines Startbildes 200 gemäß einem Ausführungsbeispiel. Das Startbild 200 wurde beispielsweise während einer Durchführung eines Verfahrens zum Erzeugen einer Bildsequenz

EP 4 293 441 A1

unter Verwendung einer Sensoreinrichtung, wie sie beispielsweise in Figur 1 beschrieben wurde, erfasst und zeigt gemäß diesem Ausführungsbeispiel einen Verschmutzungsgrad des Reinigungsguts 105 zu einem Startzeitpunkt des mehrphasigen Reinigungsprogramms an. Das bedeutet, dass die Sensoreinrichtung direkt zu Beginn des Reinigungsprogramms das Startbild 200 aufnimmt und ab diesem Startzeitpunkt fortlaufend Bilder erfasst. Gemäß diesem Ausführungsbeispiel ist an dem Reinigungsgut 105 eine Verschmutzung 205 zu erkennen. Die Sensoreinrichtung ist weiterhin ausgebildet, um ein weiteres Bild des Aufnahmeraums 110 zu erfassen, wobei das weitere Bild einem Endbild zu einem auch als Endzeitpunkt bezeichneten weiteren Zeitpunkt entspricht. Alle Bilder, die zwischen dem Startzeitpunkt und dem Endzeitpunkt erfasst wurden, werden im Folgenden auch als Zwischenbilder bezeichnet. Anders ausgedrückt ist gemäß diesem Ausführungsbeispiel eine schematische Darstellung des Startbildes 200 bei Programmstart des Reinigungsprogramms dargestellt.

Die nachfolgend beschriebenen Figuren 3 bis 6 zeigen lediglich beispielhaft jeweils ein Zwischenbild, das zu jeweils einem Zwischenzeitpunkt aufgenommen wird. Diese Zwischenbilder wurden dabei gemäß diesem Ausführungsbeispiel nacheinander und somit bezüglich des jeweils zuvor beschriebenen Zwischenbildes zu einem späteren Zwischenzeitpunkt aufgenommen. Insgesamt bedeutet das, dass in den Figuren 2 bis 7 ein vollständiger Reinigungsprozess lediglich beispielhaft unter Verwendung von Sensordaten dargestellt ist, die zum Erzeugen der Bildsequenz im zuvor erwähnten und in Figur 12 beschriebenen Verfahren verwendet werden.

Figur 3 zeigt eine beispielhafte Darstellung eines Zwischenbildes 300 gemäß einem Ausführungsbeispiel. Das hier dargestellte Zwischenbild 300 ähnelt beispielsweise dem in Figur 2 beschriebenen Zwischenbild 300. Wie zuvor erwähnt wurde das Zwischenbild 300 bei einem Übergang zwischen zwei Programmphasen des Reinigungsprogramms zu einem Zwischenzeitpunkt erfasst, wie beispielsweise bei einem Übergang zwischen einer Vorspülphase und einer Reinigungsphase. Anders als in Figur 2 weist das Reinigungsgut 110 gemäß diesem Ausführungsbeispiel einen geringeren Verschmutzungsgrad auf.

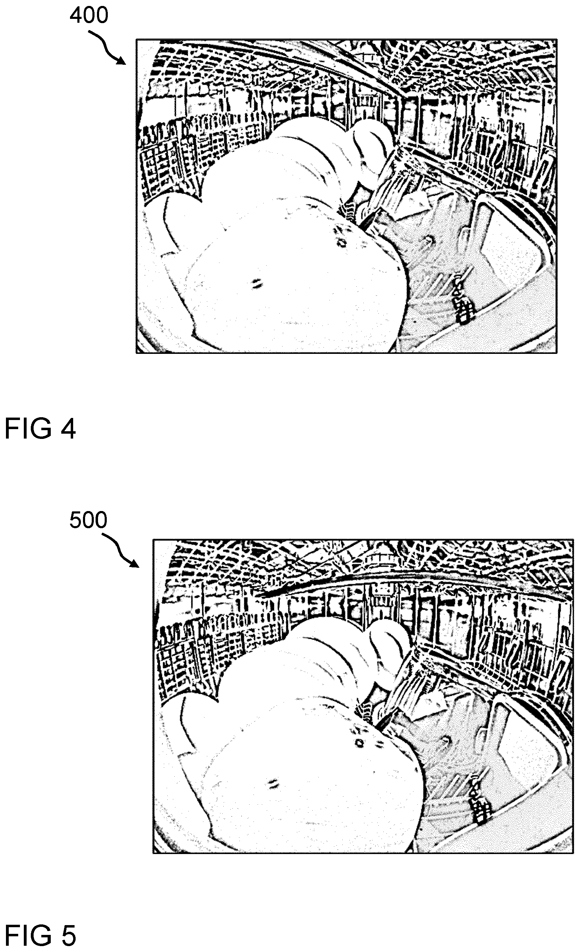

Figur 4 zeigt eine beispielhafte Darstellung eines Ausführungsbeispiels eines Zwischenbildes 400. Genauer gesagt ist gemäß diesem Ausführungsbeispiel ein Zwischenbild 400 dargestellt, das zu einem späteren Zwischenzeitpunkt erfasst wurde als das in Figur 3 beschriebene Zwischenbild. Das bedeutet, dass das hier dargestellte Zwischenbild 400 gemäß diesem Ausführungsbeispiel bei einem Übergang zwischen der Reinigungsphase und einer Zwischenspülphase aufgenommen wurde.

Figur 5 zeigt eine beispielhafte Darstellung eines Ausführungsbeispiels eines Zwischenbildes 500. Genauer gesagt ist das hier dargestellte Zwischenbild 500 als ein weiteres Zwischenbild dargestellt, das zu einem späteren Zwischenzeitpunkt erfasst wurde als das in Figur 4 beschriebene Zwischenbild. Gemäß diesem Ausführungsbeispiel repräsentiert das hier dargestellte Zwischenbild 500 einen Übergang zwischen der Zwischenspülphase und einer Klarspülphase.

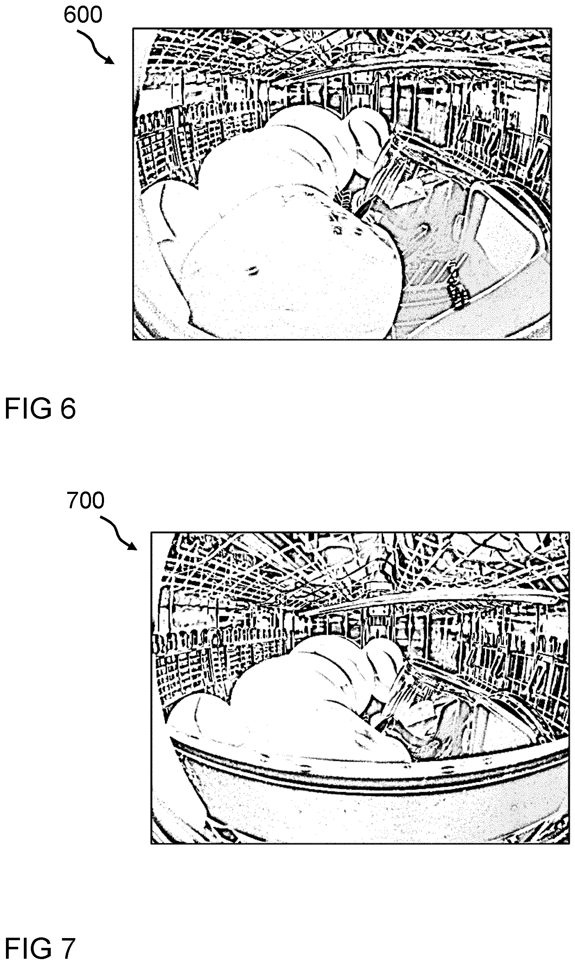

Figur 6 zeigt eine beispielhafte Darstellung eines Ausführungsbeispiels eines Zwischenbildes 600. Genauer gesagt ist das hier dargestellte Zwischenbild 600 als ein weiteres Zwischenbild dargestellt, das zu einem späteren Zwischenzeitpunkt erfasst wurde als das in Figur 5 beschriebene Zwischenbild. Gemäß diesem Ausführungsbeispiel repräsentiert das hier dargestellte Zwischenbild 600 einen Übergang zwischen der Klarspülphase und einer Trocknungsphase.

Figur 7 zeigt eine beispielhafte Darstellung eines weiteren Bildes 700 gemäß einem Ausführungsbeispiel. Wie zuvor erwähnt ist das weitere Bild 700 als ein Endbild realisiert, das ein Ende des Reinigungsprogramms repräsentiert. Das weitere Bild 700 ist dabei nach dem in mindestens einer der Figuren 3 bis 6 beschriebenen Zwischenbild erfasst worden und ist dementsprechend mit dem als Endzeitpunkt beschriebenen weiteren Zeitpunkt verknüpft.

Insgesamt weisen die in den Figuren 2 bis 7 beschriebenen Bilder jeweils einen ihnen zugeordneten Zeitstempel auf, durch den die Bilder in einer bestimmten Reihenfolge sortierbar sind.

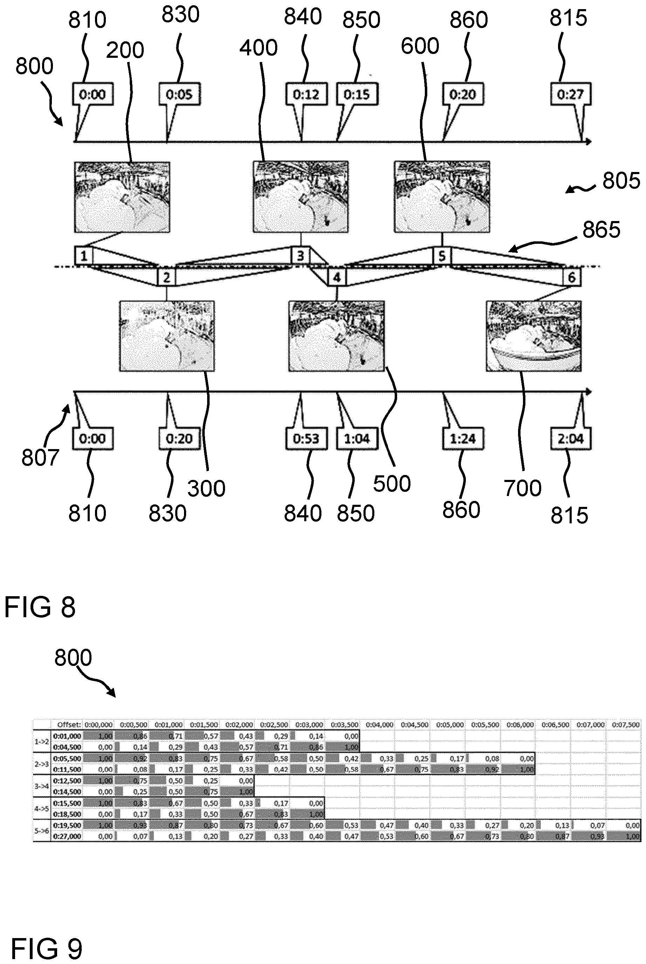

Figur 8 zeigt eine schematische Darstellung eines Ausführungsbeispiels eines Zeitverlaufs 800 einer erzeugten Bildsequenz 805. Der Zeitverlauf 800 ist dabei in Sekunden dargestellt. Gemäß diesem Ausführungsbeispiel ist der Zeitverlauf 800 der Bildsequenz einem weiteren Zeitverlauf 807 gegenübergestellt, der eine Programmlaufzeit in Stunden repräsentiert. Auffällig ist dabei, dass gemäß diesem Ausführungsbeispiel die einzelnen Bilder 200, 300, 400, 500, 600, 700 in der Bildsequenz 805 genau dann wechseln, wenn in dem Reinigungsprozess ein Phasenwechsel stattfindet.

Dazu sind in dem hier dargestellten Zeitverlauf 800 die in den Figuren 2 bis 7 beschriebenen Bilder 200, 300, 400, 500, 600, 700 dargestellt, wobei zum Startzeitpunkt 810 das Startbild 200 dargestellt ist. Gemäß diesem Ausführungsbeispiel wird das weitere Bild 700 als Endbild am Ende der Bildsequenz zu dem weiteren Zeitpunkt 815 gezeigt. Die in den Figuren 3 bis 6 beschriebenen Zwischenbilder 300, 400, 500, 600 sind dabei zwischen dem Startbild 200 und dem weiteren Bild 700 unter Berücksichtigung der ihnen zugeordneten Zwischenzeitpunkte 830, 840, 850, 860 angeordnet. Gemäß diesem Ausführungsbeispiel ist der Zwischenzeitpunkt 830 dem Zwischenbild 300, der Zwischenzeitpunkt 840 dem Zwischenbild 400, der Zwischenzeitpunkt 850 dem Zwischenbild 500 und der Zwischenzeitpunkt 860 dem Zwischenbild 600 zugeordnet.

Dabei fällt auf, dass eine Anzeigedauer der einzelnen Bilder 200, 300, 400, 500, 600, 700 unterschiedlich lang ist. Da die Bildsequenz 805 den Reinigungsprozess und somit das Reinigungsprogramm zusammengerafft wiedergibt, werden die Anzeigedauern der einzelnen Bilder 200, 300, 400, 500, 600, 700 für die zu dem jeweiligen Zwischenzeitpunkt 830, 840, 850, 860 wechselnde Programmphase unter Verwendung von mathematischen Formeln berechnet oder ermittelt. Vereinfacht gesagt stehen die Anzeigedauern der einzelnen Bilder 200, 300, 400, 500, 600, 700 im selben Verhältnis zu einer Sequenzlaufzeit wie Phasendauern der einzelnen Programmphasen, denen die einzelnen Bilder jeweils zugeordnet sind, zu einer Gesamtlaufzeit des Reinigungsprogramms.

Die Anzeigedauern der Bilder sind gemäß diesem Ausführungsbeispiel jeweils als Kästchen, gefolgt von einer aufsteigenden oder als absteigenden Rampe 865 dargestellt. Die Kästchen repräsentieren dabei einen ersten Zeitabschnitt der Anzeigedauer des jeweiligen Bildes, in dem das jeweilige Bild, so wie aufgenommen dargestellt wird. Dieser erste Zeitabschnitt kann beispielsweise jeweils eine Sekunde dauern. Er kann insbesondere unabhängig von der Gesamtlaufzeit des Reinigungsprogramms oder der jeweiligen Phasendauer fest gewählt sein. Die nach den jeweiligen Kästchen ggf. nachfolgenden oder vorangehenden Rampen 865 repräsentieren dabei jeweils einen zweiten Zeitabschnitt der Anzeigedauer der jeweiligen Bilder und stellen ein Überblendungsverhalten der einzelnen Bilder dar. Diese zweiten Zeitabschnitte der Anzeigedauer der Bilder, d.h. die Überblendungsdauer variieren abhängig von den Zeitabständen zwischen den jeweiligen Zeitpunkten der Aufnahmen. Die Höhe der Rampen stellen zu jedem Zeitpunkt betragsmäßig den Anteil eines Bildes in der Überblendung dar. Der Anteil eines ersten Bildes bzw. seine Opazität nimmt bei der Überblendung mit fortschreitender Zeit ab, d.h. es wird in der resultierenden Bildsequenz zunehmend transparenter, während der Anteil des nachfolgenden Bildes kontinuierlich zunimmt, d.h. es wird in der resultierenden Bildsequenz immer sichtbarer.

In anderen Worten ausgedrückt beschreibt der hier vorgestellte Ansatz also eine Möglichkeit der Aufnahme relevanter und aufschlussreicher Bilder 200, 300, 400, 500, 600, 700 aus dem Spülprozess, der auch als Reinigungsprozess beschrieben wird, und deren ansprechender und informativer Aufbereitung, beispielsweise in Form eines kurzen Videos, beziehungsweise der Bildsequenz 805, sodass es einem Nutzer möglich ist, sich einen besseren Eindruck von dem Spülprozess zu verschaffen.

Zunächst werden dazu relevante und aufschlussreiche Bilder 200, 300, 400, 500, 600, 700 während des Spülprozesses aufgenommen. Das erste wohl wichtigste Bild ist das Startbild 200 ganz zu Beginn des Reinigungsprozesses, das beispielsweise aufgenommen wird, noch bevor Wasser in das Reinigungsgerät eingelaufen ist und damit die gesamte Beladung mit voller Anschmutzung zeigt. Ein zweites wichtiges Bild wird als weiteres Bild 700 am Ende des Spülprozesses aufgenommen kurz bevor die Gerätetür, die auch als Spülertür bezeichnet wird, einen Spalt zur Lüftung geöffnet wird, sofern ein Nutzer das Reinigungsgerät nicht schon während beispielsweise einer Lüftungsphase öffnet und ausräumt. Dies würde den gewünschten Effekt der Bildsequenz 805 beeinträchtigen. Lediglich optional ist es denkbar, dass zur Aufnahme des weiteren Bildes 700 beispielsweise nach Ende der Lüftungsphase oder ganz am Ende des gesamten Spülprozesses die Tür kurzzeitig für die Aufnahme eines weiteren Endbildes zugezogen wird.

Optional sind weitere interessante Zeitpunkte für Bildaufnahmen denkbar, welche die Bildsequenz 805 bereichern. Beispiele dafür sind solche Bilder, die mitten in den einzelnen Spülphasen aufgenommen werden, bei denen ein mittlerer Sprüharm beispielsweise bei mittlerer Wasserweichenstellung beflottet wird. Somit erhalten die Nutzer beispielsweise auch ein Bild davon, wie es im Spüler aussieht, wenn Wasser im Umlauf ist, was gemäß diesem Ausführungsbeispiel jedoch nicht dargestellt ist.

Zusätzlich sind gemäß diesem Ausführungsbeispiel weitere Aufnahmezeitpunkte für Zwischenbilder 300, 400, 500, 600 realisierbar. Je nach Reinigungsprogramm sind dies beispielsweise die Übergänge zwischen einer Vorspül- und einer Reinigungsphase, zwischen der Reinigungs- und einer Zwischenspülphase, zwischen der Zwischenspül- und einer Klarspülphase und beispielsweise der Übergang zwischen der Klarspülphase und einer Trocknungsphase. Insgesamt ergeben sich damit je nach Spülprogramm und gewünschtem Detailgrad 2 bis 7 und optional bis zu zehn Bilder 200, 300, 400, 500, 600, 700, die durch eine Überblendung in einer kurzen Animation 805 von wenigen Sekunden zusammengeführt werden. Die Länge der jeweiligen Einblendungszeiten der einzelnen Bilder 200, 300, 400, 500, 600, 700, wobei die Einblendungszeiten gemäß diesem Ausführungsbeispiel auch als Anzeigedauer und Anzeigezeitpunkt beschrieben sind, orientiert sich hierbei an der relativen zeitlichen Dauer der jeweiligen Spülphasen, um auch die Gesamtlaufzeit des Reinigungsprogramms realistisch abzubilden.

Gemäß diesem Ausführungsbeispiel ist also ein beispielhafter Zeitverlauf 800 einer Animation dargestellt. Mittig, horizontal ist dargestellt, wie die Bilder 200, 300, 400, 500, 600, 700 zeitlich überblendet werden. Der untere Zeitstrahl, der hier als weiterer Zeitverlauf 807 beschrieben ist, zeigt eine Dauer eines exemplarischen Spülganges in Stunden an, welcher beispielsweise auch als Zeitindex als Zusatzinformation für den Nutzer eingeblendet wird. Der als Zeitverlauf 800 beschriebene obere Zeitstrahl repräsentiert die tatsächliche Laufzeit der resultierenden Bildsequenz 805. Demnach wird gemäß diesem Ausführungsbeispiel der Spülgang von 2:04 Stunden auf 27 Sekunden zusammengerafft. Andere Geschwindigkeiten, beispielsweise schneller oder langsamer, sind denkbar.

Das bedeutet, dass das Überblendungsverhalten im Detail beispielsweise wie folgt beschreibbar ist:
Jedes der Bilder 200, 300, 400, 500, 600, 700 mit der Bildnummer $B_{n\,=\,[1\text{-}6]}$ wird zum jeweiligen Zeitpunkt beispielsweise für $t_{Anzeige} = 1$ Sekunde als Standbild dargestellt. Es sind auch kleinere Werte bis hin zu 0 oder größere etwa bis hin zu 3 Sekunden denkbar, bei größeren Werten schwinden jedoch zunehmend die Überblendungsphasen, wenn die Gesamtzeit der Bildsequenz nicht zu lang werden soll. Hierbei gibt es zwei Zeitindexe, einen für den Zeitpunkt der Aufnahme des jeweiligen Bildes während des Spülgangs ($t_{(Bn,Spülgang)}$) und den korrespondierenden Zeitindex in der Animation ($t_{(Bn, Animation)}$). Zwischen den Zeitpunkten im Spülgang und in der Animation existiert folgender, direkter Zusammenhang:

$$t_{(Bn,Spülgang)} \cdot f = t_{(Bn,Animation)},$$

wobei im Beispiel der Faktor f = 0,0038 gewählt wurde, andere Werte sind jedoch möglich.

Die Animation startet mit dem ersten Bild vom Programmstart ($B_{n=1}$, $t_{(B_{n=1},Spülgang)}$ = 0:00 Stunden, $t_{(B_{n=1},Animation)}$ = 0: 00 Minuten) und wird für $t_{Anzeige}$ Sekunden dargestellt.

Das Bild $B_{n=2}$, das den Übergang vom Vorspülen zur Reinigungsphase darstellt, wurde zum Zeitpunkt $t_{(B_{n=2},Spülgang)}$ = 0:20 Stunden aufgenommen. Daraus ergibt sich aus der obigen Formel der Anzeigezeitindex von $t_{(B_{n=2},Animation)}$ = 0: 05 Minuten. Analog werden die Zeiten für die übrigen Bilder $B_{n = [3..6]}$ berechnet ($t_{(B_{n=3},Animation)}$ = 0: 12, $t_{(B_{n=4},Animation)}$ = 0:15, $t_{(B_{n=5},Animation)}$ = 0: 19 und $t_{(B_{n=6},Animation)}$ = 0: 28).

Im Beispiel ergeben sich zwischen den Anzeigezeitindexen jeweils Zeitspannen für die jeweiligen Überblendungen, was gemäß diesem Ausführungsbeispiel als ineinander übergehende, fallende und ansteigende Rampen beschrieben wurde. Die Zeitspannen zwischen jeweils zwei anzuzeigenden Bildern werden im Folgenden als $t_{(B_n,B_{n+1},Anzeige)}$ bezeichnet, wobei $B_n$ den Beginn der Überblendungsintervalls und $B_{n+1}$ das Ende beziffert. Die Länge der einzelnen Intervalle errechnet sich wie folgt, wobei das Intervall beginnend beim ersten Bild und das endend beim letzten Bild gesondert berechnet werden. Zur Verdeutlichung wird im Folgenden die Dauer aller Intervalle berechnet, für die Berechnung der Animation sind sie jedoch nicht zwingend notwendig.

Die Intervalle zwischen den Bildern mit $B_{n = [2 .. 5]}$ errechnen sich nach:

$$ts_{(B_n,B_{n+1},Animation)} = \left( t_{(B_{n+1},Animation)} - \frac{t_{Anzeige}}{2} \right) - \left( t_{(B_n,Animation)} + \frac{t_{Anzeige}}{2} \right)$$

oder einfacher

$$ts_{(B_n,B_{n+1},Animation)} = t_{(B_{n+1},Animation)} - t_{(B_n,Animation)} - t_{Anzeige}.$$

$t_{Anzeige}$ bezeichnet hier die Anzeigedauer des Standbildes um den jeweiligen Anzeigezeitpunkt $t_{(B_n,Animation)}$ herum, weshalb diese Dauer anteilig, also zwei Mal die Hälfte, vom Intervall der Überblendung abgezogen wird. Daher berechnen sich die Längen des ersten und des letzten Überblendungsintervalls für die Bilder im Beispiel $B_{n = [1, 2, 5, 6]}$ folglich etwas anders, da hier $t_{Anzeige}$ mit $t_{(B_{n=1},Animation)}$ beginnt, bzw. mit $t_{(B_{n=6},Animation)}$ endet. Für das erste Intervall mit $B_{n = 1}$ gilt demnach:

$$ts_{(B_{n=1},B_{n+1=2},Animation)} = \left( t_{(B_{n+1=2},Animation)} - \frac{t_{Anzeige}}{2} \right) - \left( t_{(B_{n=1},Animation)} + t_{Anzeige} \right)$$

und für das letzte Intervall mit $B_{n = 5}$:

$$ts_{(B_{n=5},B_{n+1=6},Animation)} = \left( t_{(B_{n+1},Animation)} - t_{Anzeige} \right) - \left( t_{(B_n,Animation)} + \frac{t_{Anzeige}}{2} \right).$$

In Zahlen heißt dies am Beispiel der Intervalle zwischen den Bildern $B_{n = [2 .. 5]}$:

$$ts_{(B_{n=2},B_{n+1=3},Animation)} = 0:12 - 0:05 - 0:01 = 0:06,$$

$$ts_{(B_{n=3},B_{n+1=4},Animation)} = 0:15 - 0:12 - 0:01 = 0:02,$$

$$ts_{(B_{n=4},B_{n+1=5},Animation)} = 0:19 - 0:15 - 0:01 = 0:03,$$

für das erste Intervall des Beispiels:

$$ts_{(B_{n=1}, B_{n+1=2}, Animation)} = (0:05 - 0:00,500) - (0:00 + 0:01) = 0:03,500$$

und für das letzte Intervall des Beispiels:

$$ts_{(B_{n=5}, B_{n+1=6}, Animation)} = (0:28 - 0:01) - (0:19 + 0:00,500) = 0:07,500.$$

Die Werte für die Start- und Endzeiten der einzelnen Intervalle lassen sich auch einfach ohne die Intervalllängen berechnen, wobei das erste und letzte Intervall gesondert zu betrachten sind. Für das erste Intervall gilt:

$$tsStart_{(B_{n=1}, B_{n+1=2})} = t_{Anzeige} = 0:01,000$$

$$tsEnde_{(B_{n=1}, B_{n+1=2})} = t_{(B_{n+1=2}, Animation)} - \frac{t_{Anzeige}}{2} = 0:04,500$$

Für das letzte Intervall gilt:

$$tsStart_{(B_{n=5}, B_{n+1=6})} = t_{(B_{n=5}, Animation)} + \frac{t_{Anzeige}}{2} = 0:19,500$$

$$tsEnde_{(B_{n=5}, B_{n+1=6})} = t_{(B_{n=5}, Animation)} - t_{Anzeige} = 0:27,000$$

Für die Zwischenintervalle (mit $B_n$ = [2 .. 4]) gilt:

$$tsStart_{(B_n, B_{n+1})} = t_{(B_n, Animation)} + \frac{t_{Anzeige}}{2}$$

$$tsEnde_{(B_n, B_{n+1})} = t_{(B_{n+1}, Animation)} - \frac{t_{Anzeige}}{2}$$

In Zahlen:

$$tsStart_{(B_{n=2}, B_{n+1=3})} = 0:05,500$$

und

$$tsEnde_{(B_{n=2}, B_{n+1=3})} = 0:11,500,$$

$$tsStart_{(B_{n=3}, B_{n+1=4})} = 0:12,500$$

und

$$tsEnde_{(B_{n=3}, B_{n+1=4})} = 0:14,500,$$

$$tsStart_{(B_{n=4}, B_{n+1=5})} = 0:15,500$$

und

$$tsEnde_{(B_{n=4}, B_{n+1=5})} = 0:18,500.$$

Mit diesen Zeitinformationen ist es nun möglich, die Animation zu berechnen (zu rendern). Hierbei ist zu berücksichtigen, dass ein Einzelbild eine Matrix aus Pixeln mit RGB-Farbinformationen besteht. Pixel eines Bildes P lassen sich somit über drei Indizes adressieren. Beispielsweise kann der Rotkanal des Pixels an der Koordinate 10 x 20 als $p_{x=10,y=20,c=1}$ = 1,0 gesetzt werden, wobei x = *[0 .. X]* und y = *[0 .. Y]* die Pixelkoordinaten bilden und *X* und *Y* die Auflösung, das bedeutet beispielsweise Länge und Breite des Bildes in Pixeln repräsentieren. Der Ursprung des Bildes liegt in der Computergrafik üblicherweise in der linken oberen Ecke. Der Farbkanal wird über c = [0 .. *2]* angesprochen, wobei 0 beispielsweise dem Rot-, 1 dem Grün- und 2 dem Blaukanal entspricht. Die Farbkanalwerte liegen in diesem Beispiel als Gleitkommazahlen im Wertebereich [0 .. *1]* vor. Oben wurde demnach der Rotwert des Pixels 10 x 20 auf den Maximalwert gesetzt.

Eine Animationssequenz besteht aus mehreren Einzelbildern mit einer festgelegten Bildwiederholfrequenz. Die Sequenz in diesem Beispiel besteht bei einer Länge von etwa 27 Sekunden und Bildwiederholfrequenz von beispielsweise *fr* = 10 aus rund 270 Einzelbildern. Das Bild $P_t$ am Zeitindex 00:05 wäre demnach das 50. Bild dieser Sequenz. Auf die Adressierung auf Pixel- und Farbkanalebene wird der Einfachheit halber im Folgenden verzichtet.

Die Standbilder der Sequenz lassen sich nun sehr einfach an die Zeitindexe kopieren:

$$P_{t=[0 .. 10]} = B_{n=1} \qquad P_{t=[45 .. 55]} = B_{n=2} \qquad P_{t=[115 .. 125]} = B_{n=3}$$

$$P_{t=[145 .. 155]} = B_{n=4} \qquad P_{t=[195 .. 205]} = B_{n=5} \qquad P_{t=[260 .. 270]} = B_{n=6}$$

Die Überblendungsphasen benötigen etwas mehr Berechnungen. Der Einfachheit halber wird an dieser Stelle beispielhaft auf den Detailgrad auf Pixel-/Farbkanalebene verzichtet und stattdessen ein ganzes Bild als ein einziges Grauwertpixel behandelt. Grundlegend ist hierbei die lineare Transformation, die von Zeitpunkten in der Überblendungsphase auf Bildmischungskoeffizienten projiziert. Da der Wertebereich für Farbwerte wie oben erwähnt zwischen 0 und 1 liegt, ist der Koeffizient für das Startbild einer Überblendungsphase definiert als:

$$m_{(B_n, t_{Animation})} = 1 - \frac{t_{Animation} - tsStart}{tsEnde - tsStart}$$

Für das Endbild einer Überblendungsphase ist der Koeffizient definiert als:

$$m_{(B_{n+1}, t_{Animation})} = 1 - m_{(B_n, t_{Animation})}$$

$t_{Animation}$ bezeichnet hier den Zeitindex des zu berechnenden Bildes der Animationssequenz, was auch als Laufzeit der Animation beschrieben wurde, und bewegt sich in Schrittweite der Bildwiederholrate zwischen $ts_{Start}$ und $ts_{Ende}$ der jeweiligen Überblendungsphase.

Lediglich optional ist es denkbar, dass zusätzliche Informationen ergänzend zu den Bildern 200, 300, 400, 500, 600, 700 während der Animation eingeblendet werden. Solche Informationen repräsentieren lediglich beispielhaft einen Zeitindex des jeweiligen Spülganges oder eine Fortschrittsanzeige, welche die Zeit repräsentiert, der Name des gewählten Spülprogrammes, die jeweilige Spülphase, beispielsweise die Spültemperatur, eine Modellbezeichnung des Reinigungsgerätes und Verbräuche sowie schließlich ein Firmen-Logo. Weitere Informationen sind zudem denkbar. Diese Informationen werden beispielsweise passend zur Bildsequenz angepasst eingeblendet.

Figur 9 zeigt eine schematische Darstellung eines Ausführungsbeispiels eines Zeitverlaufs 800 einer erzeugten Bildsequenz. Der Zeitverlauf 800 entspricht beispielsweise dem in Figur 8 beschriebenen Zeitverlauf 800 und zeigt lediglich beispielhaft eine Aufstellung der zeitlichen Verläufe von Bildmischungskoeffizienten für die zuvor erwähnten Überblendungsphasen innerhalb der Bildsequenz. Die Überblendungsphasen wurden beispielsweise in Figur 8 als Rampen beschrieben und sind gemäß diesem Ausführungsbeispiel tabellarisch dargestellt.

Anders ausgedrückt ist gemäß diesem Ausführungsbeispiel der zeitliche Verlauf der beiden Koeffizienten für jede der Überblendungsphasen dieses Beispiels in Zahlen und tabellarisch dargestellt. Aus Platzgründen wurde in dieser Darstellung eine Bildwiederholrate von $fr$ = 2 Bildern gewählt. Die erste Spalte bezeichnet die jeweilige Überblendungssequenz und die zweite Spalte $ts_{Start}$ und $ts_{Ende}$ für die jeweilige Phase. Die erste Zeile bezeichnet den Offset von $ts_{Start}$ für den jeweiligen Zeitindex ($t_{Animation}$ = $ts_{Start}$ + $Offset$). Der jeweils obere Wert einer Doppelzeile bezeichnet den Wert des Koeffizienten für das Startbild, der untere den des Endbildes im Verlauf einer Überblendungsphase.

Die noch nicht berechneten Bilder der Animation berechnen sich nun wie folgt:

$$P_{t_{Animation}} = \frac{\left(m_{(B_n, t_{Animation})} \cdot B_n\right) + \left(m_{(B_{n+1}, t_{Animation})} \cdot B_{n+1}\right)}{2}$$

$B_n$ und $B_{n+1}$ sind die jeweils zum laufenden Zeitindex $t_{Animation}$ gehörigen Start- und Endbilder der jeweiligen Überblendungsphase.

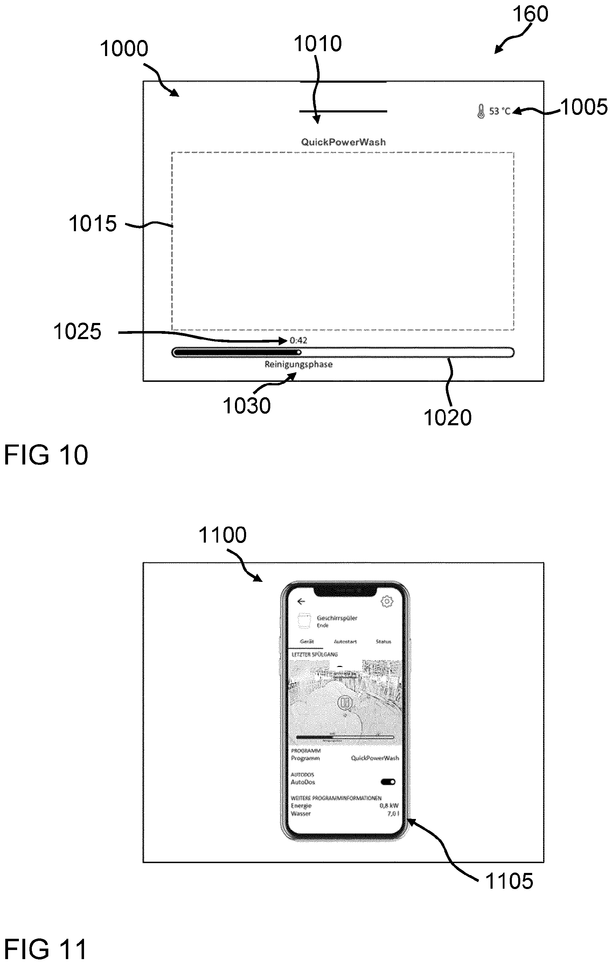

Figur 10 zeigt eine schematische Darstellung eines Ausführungsbeispiels einer Anzeigefläche 1000 auf einer Anzeigeeinrichtung 160. Die Anzeigeeinrichtung 160 ist beispielsweise und lediglich optional Teil eines Reinigungsgerätes, wie es in Figur 1 beschrieben wurde. Die Anzeigefläche 1000 ist beispielsweise ausgebildet, um eine Mehrzahl von unterschiedlichen Geräteinformationen anzuzeigen, wie beispielsweise eine Temperatur 1005 des Aufnahmeraums, ein Name des gewählten Reinigungsprogramms 1010, der gemäß diesem Ausführungsbeispiel lediglich beispielhaft gewählt ist, einen Bereich 1015, der für Kontrollelemente frei ist, wie beispielsweise eine Pausetaste, eine Playtaste und/oder Tasten zum Vorspulen oder Zurückspulen, einen Fortschrittsbalken 1020 samt Zeitindex 1025, die einen Fortschritt des Reinigungsprogramms 1010 anzeigen, und/oder eine Programmphase 1030, die beispielsweise auch als Reinigungsphase bezeichnet ist. Weiterhin ist es denkbar, dass eine Gerätemodellbezeichnung und/oder ein Hersteller-Logo auf der Anzeigefläche 1000 angezeigt wird. Diese Geräteinformationen werden beispielsweise angezeigt, um einem Nutzer des Reinigungsgeräts ein Gespür für die Reinigungsprogramme 1010 des Reinigungsgerätes zu vermitteln. Weiterhin ist es denkbar, dass im Hintergrund dieser ganzen Geräteinformationen, das bedeutet ganzflächig oder alternativ in bestimmten Anzeigeabschnitten der Anzeigefläche 1000, die Bildsequenz abgespielt wird.

Figur 11 zeigt eine schematische Darstellung einer mobilen Einheit 1100 gemäß einem Ausführungsbeispiel. Eine mobile Einheit 1100 ist beispielsweise als ein mobiles Gerät ausgeformt, das bedeutet als ein Tablet oder ein Smartphone, das mit dem Reinigungsgerät gekoppelt oder koppelbar ist. Gemäß diesem Ausführungsbeispiel werden auf der mobilen Einheit 1100 Geräteinformationen angezeigt, wie sie beispielsweise in Figur 10 beschrieben wurden. Gemäß diesem Ausführungsbeispiel wird auf der mobilen Einheit 1100 beispielsweise ein Verbrauch 1105, beispielsweise ein Wasserverbrauch und/oder ein Energieverbrauch angezeigt. Außerdem wird in einem Anzeigeabschnitt die Bildsequenz abspielbar.

Alternativ ist die mobile Einheit 1100 beispielsweise als eine zentrale Rechnereinheit realisierbar, die mittels einer Cloud mit dem Reinigungsgerät kommuniziert. Die mobile Einheit 1100 weist weiterhin eine Verknüpfungseinheit auf, die beispielsweise als Steuereinheit realisiert oder realisierbar ist. Die zentrale Recheneinheit ist optional ausgebildet, um eine Übertragung der Sensordaten mittels einer Telekommunikationsverbindung zu einem weit entfernten Reinigungsgerät zu ermöglichen. Das bedeutet, dass die Sensordaten von der zentralen Rechnereinheit als haushaltsexterne Vorrichtung eingelesen werden. Auf der mobilen Einheit 1100 ist beispielsweise eine Applikation (App) angeordnet, über welche die Bildsequenz oder die Sensordaten auf der mobilen Einheit 1100 eingelesen und die Bildsequenz angezeigt wird.

In anderen Worten ausgedrückt wird die Bildsequenz als eine Animation oder als ein Video auf der mobilen Einheit 1100 angezeigt und/oder abgespielt. Das Abspielen erfolgt beispielsweise in einer Endlosschleife. Zusätzlich oder alternativ ist die Bildsequenz beispielsweise auf einem Gerätedisplay, das in Figur 1 als Anzeigeeinrichtung beschrieben wurde, angezeigt.

Der Ort der Bildverarbeitung und/oder Animationserstellung ist ebenfalls an mehreren Orten möglich. Zum einen ist das auch als Geschirrspüler bezeichnete Reinigungsgerät selbst ein guter Ort, um die erfassten Bilder beispielsweise zwischenzuspeichern und die Berechnungen durchzuführen. Andererseits sind die Bilder in eine Cloud ladbar, um dort direkt die Bildsequenz zu erstellen, von wo aus die Kunden-App die Bildsequenz herunterlädt. Als letzte Möglichkeit ist die Animation auch erst in der App erstellbar, nachdem die Bilder beispielsweise über die Cloud ihren Weg auf ein kundeneigenes Endgerät, das hier als mobile Einheit 1100 beschrieben ist, genommen haben. Da im letzten Fall allerdings nicht bekannt ist, wie viele Ressourcen im Endgerät für die Berechnungen zur Verfügung stehen, ist dieser Weg als letzte Alternative zu sehen.

Figur 12 zeigt ein Ablaufdiagramm eines Ausführungsbeispiels eines Verfahrens 1200 zum Erzeugen einer Bildsequenz eines mehrphasigen Reinigungsprogramms für ein Reinigungsgerät. Durch das Verfahren 1200 wird beispielsweise eine Bildsequenz erzeugt, wie sie beispielsweise in den Figuren 2 bis 8 beschrieben wurde. Das Verfahren 1200 ist weiterhin für ein Reinigungsgerät durchführbar, wie es beispielsweise in Figur 1 beschrieben wurde.

Das Verfahren 1200 umfasst einen Schritt 1205 des Einlesens von Sensordaten über eine Schnittstelle zu einer Sensoreinrichtung des Reinigungsgerätes. Die Sensordaten repräsentieren ein Startbild des Aufnahmeraums zu einem Startzeitpunkt des mehrphasigen Reinigungsprogramms. Im Schritt 1205 des Einlesens wird mindestens ein weiteres Bild des Aufnahmeraums zu einem weiteren Zeitpunkt des Reinigungsprogramms eingelesen. Weiterhin umfasst das Verfahren 1200 einen Schritt 1210 des Verarbeitens der Sensordaten unter Verwendung des Startzeitpunkts und/oder des weiteren Zeitpunkts, um eine das Reinigungsprogramm repräsentierende Bildsequenz zu erzeugen. Gemäß diesem Ausführungsbeispiel wird das weitere Bild im Schritt 1210 des Verarbeitens als Endbild interpretiert, das ein Programmende des Reinigungsprogramms repräsentiert. Im Schritt 1210 des Verarbeitens werden die Sensordaten dabei derart verarbeitet, um einen Anzeigezeitpunkt und eine Anzeigedauer für das Startbild und/oder einen weiteren Anzeigezeitpunkt und eine weitere Anzeigedauer für das weitere Bild unter Berücksichtigung einer vorbestimmten Programmlaufzeit des Reinigungsprogramms zu ermitteln. Dabei ist die Anzeigedauer der einzelnen Bilder, insbesondere die Dauer der Überblendung der Bilder mit dem ggf. vorangehenden oder nachfolgenden Bild, unterschiedlich lang realisierbar, da sich diese nach einer Dauer der einzelnen Programmphasen, denen die jeweiligen Bilder jeweils zugeordnet sind, und der Gesamtlaufzeit des Reinigungsprogramms richtet.

Optional werden im Schritt 1205 des Einlesens weitere Sensordaten über die Schnittstelle zu der Sensoreinrichtung eingelesen, die mindestens ein Zwischenbild des Aufnahmeraums zu einem zwischen dem Startzeitpunkt und dem weiteren Zeitpunkt liegenden Zwischenzeitpunkt repräsentieren. Folglich werden die weiteren Sensordaten im Schritt 1210 des Verarbeitens unter Verwendung des Zwischenzeitpunkts verarbeitet, um die Bildsequenz zu erzeugen. Das Zwischenbild wird dabei lediglich optional ansprechend auf ein Wechselsignal eingelesen, einen Phasenwechsel des Reinigungsprogramms repräsentiert. Weiterhin optional umfasst das Verfahren 1200 einen Schritt 1215 des Bereitstellens der erzeugten Bildsequenz an eine Schnittstelle zu einer Reinigungsgeräte-internen oder Reinigungsgeräte-externen Anzeigeeinrichtung zum Anzeigen der erzeugten Bildsequenz, sodass beispielsweise ein Nutzer befähigt wird, den Reinigungsprozess nachzuverfolgen und zu überprüfen. Beispielsweise werden dabei Geräteinformationen bereitgestellt, die mindestens eine Zeitinformation, eine Programminformation, wie beispielsweise eine aktuelle Spülphase, und/oder eine Verbrauchsinformation bezüglich Wasser- und/oder Stromverbrauch repräsentieren. Eine beispielhafte Anzeige samt möglicher anzuzeigender Geräteinformationen wurden in Figur 10 beschrieben.

Figur 13 zeigt ein Blockschaltbild einer Verknüpfungseinheit 120 gemäß einem Ausführungsbeispiel. Die Verknüpfungseinheit 120 ist beispielsweise als eine Steuereinheit ausgeformt, die ausgebildet ist, um ein Verfahren zum Erzeugen einer Bildsequenz eines mehrphasigen Reinigungsprogramms für ein Reinigungsgerät anzusteuern und/oder auszuführen. Die Verknüpfungseinheit 120 ist dabei als Teil eines Reinigungsgeräts ausgeformt oder ausformbar, wie es beispielsweise in Figur 1 beschrieben wurde. Gemäß diesem Ausführungsbeispiel weist die Verknüpfungseinheit 120 dazu eine Einleseeinheit 1300, eine Verarbeitungseinheit 1305 und/oder eine Bereitstelleinheit 1310 auf. Die Einleseeinheit 1300 ist dabei ausgebildet, um Sensordaten 1315 über eine Schnittstelle zu einer Sensoreinrichtung 115 des Reinigungsgerätes einzulesen. Die Sensordaten 1315 repräsentieren ein Startbild des Aufnahmeraums zu einem Startzeitpunkt des mehrphasigen Reinigungsprogramms und mindestens ein weiteres Bild des Aufnahmeraums zu einem weiteren Zeitpunkt des Reinigungsprogramms. Dadurch wird beispielsweise eine Verschmutzung des Reinigungsguts zu Beginn des Reinigungsvorgangs erfasst. Das weitere Bild wird dabei als Endbild interpretiert, das ein Programmende des Reinigungsprogramms repräsentiert. Die Verarbeitungseinheit 1305 ist ausgebildet, um die Sensordaten 1315 unter Verwendung des Startzeitpunkts und/oder des weiteren Zeitpunkts zu verarbeiten, um eine das Reinigungsprogramm repräsentierende Bildsequenz 805 zu erzeugen. Die Bereitstelleinheit 1310 ist gemäß diesem Ausführungsbeispiel ausgebildet, um die erzeugte Bildsequenz 805 an eine Schnittstelle zu einer Reinigungsgeräte-internen oder Reinigungsgeräte-externen Anzeigeeinrichtung 160 zum Anzeigen der erzeugten Bildsequenz 805 bereitzustellen.

Gemäß diesem Ausführungsbeispiel werden im Schritt 1300 des Einlesens weitere Sensordaten 1320 über die Schnittstelle zu der Sensoreinrichtung 115 eingelesen, die mindestens ein Zwischenbild des Aufnahmeraums zu einem zwischen dem Startzeitpunkt und dem weiteren Zeitpunkt liegenden Zwischenzeitpunkt repräsentieren. Die weiteren Sensordaten 1320 werden unter Verwendung des Zwischenzeitpunkts verarbeitet, um die Bildsequenz zu erzeugen. Weiterhin optional ist die Einleseeinheit 1300 ausgebildet, um das Zwischenbild ansprechend auf ein Wechselsignal 1325 einzulesen, wobei das Wechselsignal 1325 einen Phasenwechsel des Reinigungsprogramms repräsentiert. Weiterhin ist die Bereitstelleinheit 1310 ausgebildet, um Geräteinformationen 1330 bereitzustellen, die mindestens eine Zeitinformation, eine Programminformation und/oder eine Verbrauchsinformation repräsentieren.

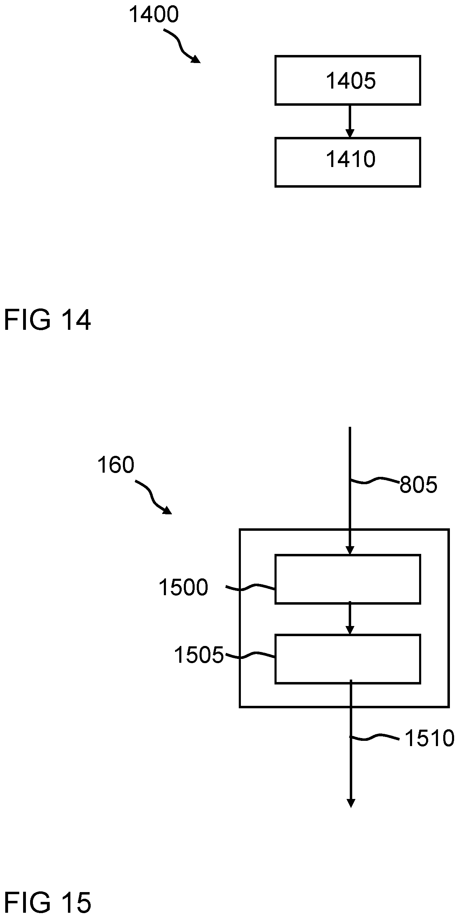

Figur 14 zeigt ein Ablaufdiagramm eines Ausführungsbeispiels eines Verfahrens 1400 zum Anzeigen einer Bildsequenz. Das Verfahren 1400 umfasst dazu einen Schritt 1405 des Einlesens der Bildsequenz und einen Schritt 1410 des Anzeigens von der Bildsequenz entsprechenden Daten an einer Anzeigeeinrichtung. Das Verfahren 1400 wird beispielsweise von einer Anzeigeeinrichtung angesteuert und/oder durchgeführt, wie sie beispielsweise in Figur 1 als Teil eines Reinigungsgerätes beschrieben wurde.

Figur 15 zeigt ein Blockschaltbild eines Ausführungsbeispiels einer Anzeigeeinrichtung 160 zum Anzeigen einer Bildsequenz für ein Reinigungsgerät. Die Anzeigeeinrichtung 160 weist dabei eine Einleseeinheit 1500 und eine Anzeigeeinheit 1505 auf, die ausgebildet sind, um die Schritte eines Verfahrens zum Anzeigen einer Bildsequenz, wie es beispielsweise in Figur 14 beschrieben wurde, anzusteuern und/oder auszuführen. Die Einleseeinheit 1500 ist dabei ausgebildet, um die Bildsequenz 805 einzulesen. Die Anzeigeeinheit 1505 ist ausgebildet, um der Bildsequenz 805 entsprechenden Daten 1510 anzuzeigen.

**Patentansprüche**

1. Verfahren (1200) zum Erzeugen einer Bildsequenz (805) eines mehrphasigen Reinigungsprogramms für ein Reinigungsgerät (100) mit einem Aufnahmeraum (110) zum Aufnehmen von Reinigungsgut (105), wobei das Verfahren (1200) die folgenden Schritte umfasst:

   - Einlesen (1205) von Sensordaten (1315) über eine Schnittstelle zu einer Sensoreinrichtung (115) des Reinigungsgerätes (100), wobei die Sensordaten (1315) ein Startbild (200) des Aufnahmeraums (110) zu einem Startzeitpunkt (810) des mehrphasigen Reinigungsprogramms und mindestens ein weiteres Bild (700) des Aufnahmeraums (110) zu einem weiteren Zeitpunkt (815) des Reinigungsprogramms repräsentieren; und
   - Verarbeiten (1210) der Sensordaten (1315) unter Verwendung des Startzeitpunkts (810) und/oder des weiteren Zeitpunkts (815), um eine das Reinigungsprogramm und/oder einen Ablauf des Reinigungsprogramms repräsentierende Bildsequenz (805) zu erzeugen.

2. Verfahren (1200) gemäß Anspruch 1, wobei im Schritt (1210) des Verarbeitens das weitere Bild (700) als Endbild interpretiert wird, das ein Programmende des Reinigungsprogramms repräsentiert.

3. Verfahren (1200) gemäß einem der vorangegangenen Ansprüche, wobei im Schritt (1210) des Verarbeitens die Sensordaten (1315) derart verarbeitet werden, um einen Anzeigezeitpunkt und eine Anzeigedauer für das Startbild (200) und/oder einen weiteren Anzeigezeitpunkt und eine weitere Anzeigedauer für das weitere Bild (700) unter Berücksichtigung einer vorbestimmten Programmlaufzeit des Reinigungsprogramms zu ermitteln.

4. Verfahren (1200) gemäß einem der vorangegangenen Ansprüche, wobei im Schritt (1205) des Einlesens weitere Sensordaten (1320) über die Schnittstelle zu der Sensoreinrichtung (115) eingelesen werden, die mindestens ein Zwischenbild des Aufnahmeraums (110) zu einem zwischen dem Startzeitpunkt (810) und dem weiteren Zeitpunkt (815) liegenden Zwischenzeitpunkt (830, 840, 850, 860) repräsentieren, wobei im Schritt (1210) des Verarbeitens die weiteren Sensordaten (1320) unter Verwendung des Zwischenzeitpunkts (830, 840, 850, 860) und/oder des Zwischenbildes verarbeitet werden, um die Bildsequenz (805) zu erzeugen.

5. Verfahren (1200) gemäß Anspruch 4, wobei das Zwischenbild (300; 400; 500; 600) ansprechend auf ein Wechselsignal (1325) eingelesen wird, wobei das Wechselsignal (1325) einen Phasenwechsel des Reinigungsprogramms repräsentiert.

6. Verfahren (1200) gemäß einem der vorangegangenen Ansprüche, mit einem Schritt (1215) des Bereitstellens der erzeugten Bildsequenz (805) an eine Schnittstelle zu einer Reinigungsgeräte-internen oder Reinigungsgeräte-externen Anzeigeeinrichtung (160) zum Anzeigen der erzeugten Bildsequenz (805).

7. Verfahren (1200) gemäß Anspruch 6, wobei im Schritt (1215) des Bereitstellens zumindest eine Geräteinformation (1005, 1010, 1015, 1020, 1025, 1030) bereitgestellt wird, die mindestens eine Zeitinformation, eine Programminformation und/oder eine Verbrauchsinformation repräsentieren.

8. Verknüpfungseinheit (120), die ausgebildet ist, um die Schritte (1205, 1210, 1215) des Verfahrens (1200) gemäß einem der vorangegangenen Ansprüche in entsprechenden Einheiten (1300, 1305, 1310) auszuführen und/oder anzusteuern.

9. Verfahren (1400) zum Anzeigen einer Bildsequenz (805), die gemäß einem Verfahren (1200) nach einem der Ansprüche 1 bis 7 erzeugt wurde, wobei das Verfahren (1400) die folgenden Schritte umfasst:

   - Einlesen (1405) der Bildsequenz (805); und
   - Anzeigen (1410) von der Bildsequenz (805) entsprechenden Daten an einer Anzeigeeinrichtung (160).

10. Anzeigeeinrichtung (160) zum Anzeigen einer Bildsequenz (805) für ein Reinigungsgerät (100), wobei die Anzeigeeinrichtung (160) Einheiten (1500, 1505) zum Ansteuern und/oder Ausführen der Schritte (1405, 1410) des Verfahrens (1400) gemäß Anspruch 9 aufweist.

11. Reinigungsgerät (100), das die folgenden Merkmale aufweist:

   - einen Aufnahmeraum (110) zum Aufnehmen von Reinigungsgut (105);
   - eine Sensoreinrichtung (115) zum Erfassen von Sensordaten (1315) bezüglich des Aufnahmeraums (110); und
   - eine Verknüpfungseinheit (120) gemäß Anspruch 8, die mit der Sensoreinrichtung (115) gekoppelt ist.

12. Reinigungsgerät (100) gemäß Anspruch 11, wobei das Reinigungsgerät (100) eine Anzeigeeinrichtung (160) gemäß Anspruch 10 aufweist.

13. Mobile Einheit (1100) und/oder zentrale Rechnereinheit (157), die eine Verknüpfungseinheit (120) gemäß Anspruch 8 aufweist.

14. Computer-Programmprodukt mit Programmcode zur Durchführung eines der Verfahren (1200; 1400) gemäß Anspruch 1 bis 7 oder 9, wenn das Computer-Programmprodukt auf einer Verknüpfungseinheit (120) gemäß Anspruch 8 ausgeführt wird.

FIG 1

FIG 2

FIG 3

400

FIG 4

500

FIG 5

600

FIG 6

700

FIG 7

FIG 8

FIG 9

| Offset: | 0:00,000 | 0:00,500 | 0:01,000 | 0:01,500 | 0:02,000 | 0:02,500 | 0:03,000 | 0:03,500 | 0:04,000 | 0:04,500 | 0:05,000 | 0:05,500 | 0:06,000 | 0:06,500 | 0:07,000 | 0:07,500 |
|---|---|---|---|---|---|---|---|---|---|---|---|---|---|---|---|---|
| 1->2 0:01,000 | 1,00 | 0,86 | 0,71 | 0,57 | 0,43 | 0,29 | 0,14 | 0,00 | | | | | | | | |
| 0:04,500 | 0,00 | 0,14 | 0,29 | 0,43 | 0,57 | 0,71 | 0,86 | 1,00 | | | | | | | | |
| 2->3 0:05,500 | 1,00 | 0,92 | 0,83 | 0,75 | 0,67 | 0,58 | 0,50 | 0,42 | 0,33 | 0,25 | 0,17 | 0,08 | 0,00 | | | |
| 0:11,500 | 0,00 | 0,08 | 0,17 | 0,25 | 0,33 | 0,42 | 0,50 | 0,58 | 0,67 | 0,75 | 0,83 | 0,92 | 1,00 | | | |
| 3->4 0:12,500 | 1,00 | 0,75 | 0,50 | 0,25 | 0,00 | | | | | | | | | | | |
| 0:14,500 | 0,00 | 0,25 | 0,50 | 0,75 | 1,00 | | | | | | | | | | | |
| 4->5 0:15,500 | 1,00 | 0,83 | 0,67 | 0,50 | 0,33 | 0,17 | 0,00 | | | | | | | | | |
| 0:18,500 | 0,00 | 0,17 | 0,33 | 0,50 | 0,67 | 0,83 | 1,00 | | | | | | | | | |
| 5->6 0:19,500 | 1,00 | 0,93 | 0,87 | 0,80 | 0,73 | 0,67 | 0,60 | 0,53 | 0,47 | 0,40 | 0,33 | 0,27 | 0,20 | 0,13 | 0,07 | 0,00 |
| 0:27,000 | 0,00 | 0,07 | 0,13 | 0,20 | 0,27 | 0,33 | 0,40 | 0,47 | 0,53 | 0,60 | 0,67 | 0,73 | 0,80 | 0,87 | 0,93 | 1,00 |

160

1000 1010

1005

QuickPowerWash

1015

1025 0:42

Reinigungsphase

1030 1020

FIG 10

1100

Geschirrspüler
Ende

Gerät        Autostart        Status

LETZTER SPÜLGANG

PROGRAMM
Programm          QuickPowerWash

AUTODOS
AutoDos

WEITERE PROGRAMMINFORMATIONEN
Energie          0,8 kW
Wasser           7,0 l

1105

FIG 11

1200

```
┌─────────────────┐
│      1205       │
└─────────────────┘
         │
         ▼
┌─────────────────┐
│      1210       │
└─────────────────┘
         │
         ▼
┌─────────────────┐
│      1215       │
└─────────────────┘
```

FIG 12

FIG 13

1400

```
┌─────────────────┐
│      1405       │
└─────────────────┘
         │
         ▼
┌─────────────────┐
│      1410       │
└─────────────────┘
```

FIG 14

160

805

```
┌──────────────────────────┐
│   ┌──────────────────┐    │
│   │       1500       │    │
│   └──────────────────┘    │
│            │              │
│            ▼              │
│   ┌──────────────────┐    │
│   │       1505       │    │
│   └──────────────────┘    │
└────────────│─────────────┘
             │  1510
             ▼
```

FIG 15

Europäisches
Patentamt

European
Patent Office

Office européen
des brevets

# EUROPÄISCHER RECHERCHENBERICHT

**Nummer der Anmeldung**

**EP 23 17 6065**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 106430 A1 (MIELE & CIE [DE]) 3. November 2016 (2016-11-03) * Absätze [0001] – [0005], [0022], [0050], [0052]; Ansprüche 1-10; Abbildung 1 * | 1-14 | INV. G05B19/042 A47L15/00 G05B15/02 A47L15/42 |
| | ----- | | |
| X | DE 10 2017 212319 A1 (BSH HAUSGERAETE GMBH [DE]) 24. Januar 2019 (2019-01-24) * Absätze [0001] – [0006], [0035] – [0038], [0043] – [0056]; Ansprüche 1-15; Abbildung 1 * | 1-14 | |
| | ----- | | |
| X | DE 10 2019 100190 A1 (MIELE & CIE [DE]) 9. Juli 2020 (2020-07-09) * Absätze [0038] – [0041], [0055] – [0057], [0063]; Abbildungen 1, 2, 13-15 * | 1-14 | |
| | ----- | | |
| X | US 2020/301382 A1 (FAWAZ BASSAM [US] ET AL) 24. September 2020 (2020-09-24) * Absätze [0005] – [0008], [0016] – [0017], [0036], [0042] – [0045], [0048], [0054]; Abbildung 6 * | 1-14 | |
| | ----- | | |

**RECHERCHIERTE SACHGEBIETE (IPC)**

G05B
A47L

Der vorliegende Recherchenbericht wurde für alle Patentansprüche erstellt

| Recherchenort | Abschlußdatum der Recherche | Prüfer |
|---|---|---|
| München | 12. Oktober 2023 | Juillot, Olivier J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 6065

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2023

| Im Recherchenbericht angeführtes Patentdokument | Datum der Veröffentlichung | Mitglied(er) der Patentfamilie | Datum der Veröffentlichung |
|---|---|---|---|
| DE 102016106430 A1 | 03-11-2016 | KEINE | |
| DE 102017212319 A1 | 24-01-2019 | DE 102017212319 A1 | 24-01-2019 |
| | | WO 2019015990 A1 | 24-01-2019 |
| DE 102019100190 A1 | 09-07-2020 | DE 102019100190 A1 | 09-07-2020 |
| | | EP 3908166 A1 | 17-11-2021 |
| | | US 2022095883 A1 | 31-03-2022 |
| | | WO 2020144128 A1 | 16-07-2020 |
| US 2020301382 A1 | 24-09-2020 | US 2020301382 A1 | 24-09-2020 |
| | | US 2021034026 A1 | 04-02-2021 |
| | | WO 2020186676 A1 | 24-09-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102013223932 A1